(19) Europäisches Patentamt / European Patent Office / Office européen des brevets

(11) **EP 3 247 064 A1**

(12) **EUROPEAN PATENT APPLICATION**

(43) Date of publication:
**22.11.2017 Bulletin 2017/47**

(51) Int Cl.:
**H04L 1/08** (2006.01)    **H04L 7/04** (2006.01)
**H04B 1/709** (2011.01)    **H04L 27/26** (2006.01)

(21) Application number: **16207425.6**

(22) Date of filing: **29.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.05.2016 TW 105115115**

(71) Applicant: **MStar Semiconductor, Inc.**
**Chupei 302 (TW)**

(72) Inventors:
• **Dornstetter, Jean-Louis**
  **78460 Choisel (FR)**
• **Wang, Kun-Yu**
  **302 Chupei (TW)**
• **Lai, Ko-Yin**
  **302 Chupei (TW)**
• **Tung, Tai-Lai**
  **302 Chupei (TW)**
• **Liao, Yi-Ying**
  **302 Chupei (TW)**

(74) Representative: **Mollekopf, Gerd Willi**
**Kahler Käck Mollekopf**
**Partnerschaft von Patentanwälten mbB**
**Vorderer Anger 239**
**86899 Landsberg/Lech (DE)**

(54) **CODEWORD DECODING CIRCUIT FOR DVB RECEIVER AND ASSOCIATED DECODING METHOD**

(57)    A codeword decoding circuit (300) for a Digital Video Broadcasting (DVB) receiver, for decoding an encoded codeword in an input signal is provided. The circuit comprises: a multiplier (305), multiplying the input signal by a reference sequence to generate a plurality of products, which are in a cyclic sequence; and a determination circuit (310), coupled to the multiplier (305), decoding the encoded codeword according to at least a part of the products and a plurality of comparison sequences. The input signal corresponds to one of the plurality of encoded sequences, and the comparison sequences are results of multiplying the reference sequence by the encoded sequences.

Also provided is a codeword decoding method for a Digital Video Broadcasting (DVB) receiver, for decoding an encoded codeword in an input signal, the method comprising: multiplying the input signal by a reference sequence to generate a plurality of products, which are in a cyclic sequence; and decoding the encoded codeword according to at least a part of the products and a plurality of comparison sequences. The input signal corresponds to one of the plurality of encoded sequences, and the comparison sequences are results of multiplying the reference sequence by the encoded sequences.

FIG. 3

EP 3 247 064 A1

**Description**

**Field of the Invention**

The invention relates in general to a codeword decoding circuit and a codeword decoding method, and more particularly to a codeword decoding circuit for a Digital Video Broadcasting (DVB) receiver and an associated codeword decoding method.

**Description of the Related Art**

In a P1 symbol of a Digital Video Broadcasting over Terrestrial 2 (DVB-T2) signal, a codeword S1 and a codeword S2 are respectively encoded into a 64-bit encoded codeword CSS1 and a 256-bit encoded codeword CSS2 at a transmitter. Thus, a decoding circuit 160 in a P1 symbol processing circuit 100 at a receiver is used to decode and retrieve the codeword S1 and the codeword S2 according to the encoded codeword CSS1 and the encoded codeword CSS2, respectively. The codeword S1 includes 3 bits, which may represent 8 different codewords S1 (000, 001, ..., and 111) each corresponding to one type of encoded codeword CSS1. The encoded codeword CSS1 is in fact one selected from the 8 encoded sequences. Each of the sequences includes 8 8-bit Golay complementary sequences (GCS), each of which corresponding to one type of codeword S1. Similarly, the codeword S2 includes 4 bits, which may represent 16 different codewords S1 (0000, 0001, ..., and 1111) each corresponding to one type of encoded codeword CSS2. The encoded codeword CSS2 is in fact one selected from the 16 encoded sequences. Each of the sequences includes 16 16-bit GCSs, each of which corresponding to one type of codeword S2. In a conventional approach, a DVB-T2 receiver performs decoding by exhaustive searching. That is, a correlation operation is performed on all possible sequences and the encoded codeword CSS1 and the encoded codeword CSS2 included in a demodulated signal that a demodulation circuit 150 provides, and the corresponding codeword S1 and codeword S2 are then determined according to the operation results. However, the above method is extremely time-consuming.

**SUMMARY OF THE INVENTION**

The invention is directed to a codeword decoding circuit for a Digital Video Broadcasting (DVB) receiver and an associated codeword decoding method to accelerate a decoding speed.
The invention is defined in claims 1 and 8, respectively. Particular embodiments are set out in the dependent claims.
The present invention discloses a codeword decoding circuit for a DVB receiver to decode an encoded codeword included in an input signal. The codeword decoding circuit includes: a multiplier, multiplying the input signal by a reference sequence to generate a plurality of products, which are in a cyclic sequence; and a determination circuit, coupled to the multiplier, decoding the codeword according to at least a part of the products and a plurality of comparison sequences. The input signal corresponds to one of a plurality of encoded sequences, and the comparison sequences are products of multiplying the reference sequence by the encoded sequences.
The present invention further discloses a codeword decoding method for a DVB receiver to decode an encoded codeword included in an input signal. The codeword decoding method includes: multiplying the input signal by a reference sequence to generate a plurality of products, which are in a cyclic sequence; and decoding the codeword according to at least a part of the products and a plurality of comparison sequences. The input signal corresponds to one of a plurality of encoded sequences, and the comparison sequences are products of multiplying the reference sequence by the encoded sequences.
Using the repetitive and cyclic properties of data, the codeword decoding circuit for a DVB receiver and the associated codeword decoding circuit of the present invention are capable of reducing the amount of computation required for a decoding process, thereby accelerating the decoding speed.
The features of the codeword decoding circuit as disclosed in the claims, the description and the figures can be combined into any combination or sub-combination of features for the claimed codeword decoding circuit. The features of the codeword decoding method as disclosed in the claims, the description and the figures can be combined into any combination or sub-combination of features for the claimed codeword decoding method. In the same way any features relating to the codeword decoding method as disclosed herein can be combined with any combination of features of the codeword decoding circuit and the features relating to the codeword decoding circuit can be combined with any combination of features of the codeword decoding method, for defining the claimed subject matter.
The above and other aspects of the invention will become better understood with regard to the following detailed description of the preferred but non-limiting embodiments. The following description is made with reference to the accompanying drawings.

## BRIEF DESCRIPTION OF THE DRAWINGS

FIG. 1    is a schematic diagram of a T2 data frame of a DVB-T2 system;

FIG. 2    is a block diagram of a P1 symbol processing circuit at a DVB-T2 receiver;

FIG. 3    is a codeword decoding circuit for a DVB-T2 system according to an embodiment of the present invention;

FIG. 4    is a detailed block diagram of determination circuit 310 according to an embodiment of the present invention;

FIG. 5    is a detailed circuit diagram of a storage module 312 according to an embodiment of the present invention;

FIG. 6    is a codeword decoding circuit for DVB-T2 according to another embodiment of the present invention;

FIG. 7    is a detailed circuit diagram of a storage module 312 and a Hadamard transform circuit 316 according to an embodiment of the present invention;

FIG. 8    is a flowchart of a codeword decoding method for a DVB-T2 system according to an embodiment of the present invention; and

FIG. 9    is a decoding mapping table.

## DETAILED DESCRIPTION OF THE INVENTION

The disclosure of the application includes a codeword decoding circuit for a Digital Video Broadcasting (DVB) receiver and an associated codeword decoding method capable of promptly decoding codewords. In possible implementation, one skilled person in the art may choose equivalent elements or steps to implement the present invention based on the disclosure of the application. That is, the implementation of the present invention is not limited by the embodiments disclosed in the application.

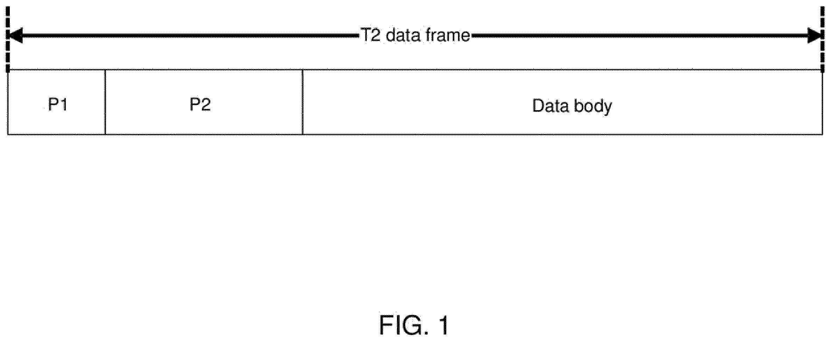

FIG. 1 shows a schematic diagram of a T2 data frame of a DVB-T2 signal. Each T2 data frame includes a P1 symbol, a P2 symbol and a data body. The P1 symbol carries certain information of a transmitter, e.g., a fast Fourier transform (FFT) mode adopted for modulating data, and whether the DVB-T2 system is single-input-single-output (SISO) or multiple-input-single-output (MISO).

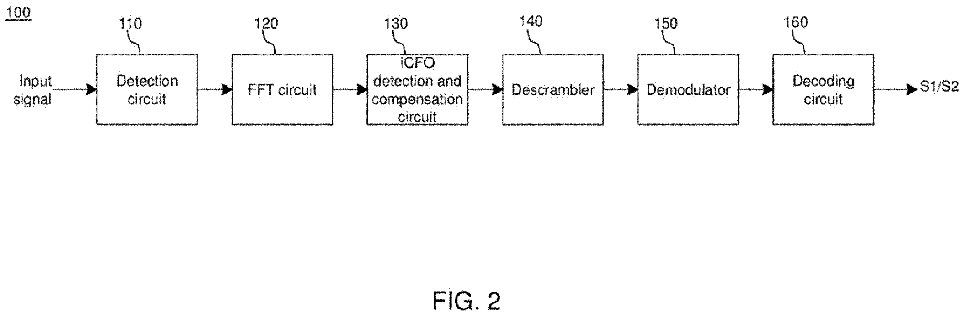

FIG. 2 shows a block diagram of a P1 symbol processing circuit in a DVB-T2 receiver. In the P1 symbol processing circuit 100, a detection circuit 110 of performs detection of data frame synchronization and spectral inversion on the input signal P1 in the time domain, and an FFT circuit 120 performs an FFT operation for the input signal P1 according to an output of the detection circuit 110. Next, an integer carrier frequency offset (iCFO) detection and compensation circuit 130 performs iCFO detection and compensation on an output of the FFT circuit 120 in the frequency domain, and a descrambler 140 performs a descrambling process on an output of the iCFO detection and compensation circuit 130. A demodulation circuit 150 then performs a demodulation process on an output of the descrambler 140, and a decoding circuit 160 performs a decoding process on an output of the demodulation circuit 150 to retrieve a codeword S1 and a codeword S2. According to the codeword S1 and the codeword S2, information adopted for data modulation including FFT mode as well as SISO and MISO can be correspondingly obtained.

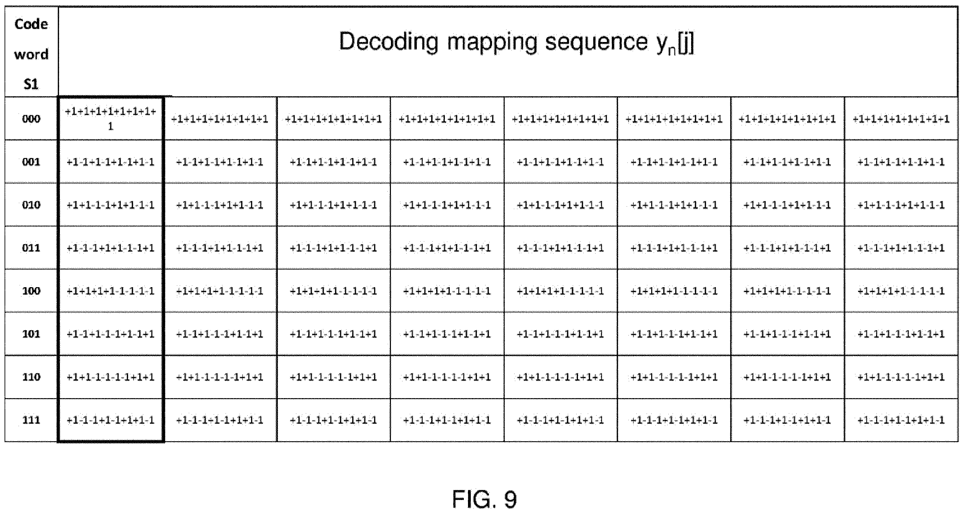

An example of a decoding process for obtaining the codeword S1 is given to explain how the DVB-T2 receiver of the present invention performs a decoding process for the codeword S1 and the codeword S2. One of 8 possible orthogonal sequences corresponding to the encoded codeword CSS1 is selected as a reference sequence (e.g., an encoded sequence corresponding to the codeword S1=000 is selected), whose values are then transformed (e.g., transforming bit 0 to a value +1, and bit 1 to a value -1). Next, the transformed reference sequence CSS1' is multiplied by other encoded sequences possibly corresponding to the encoded codeword CSS1 to generate a plurality of decoding mapping sequences $y_n[j]$, and a decoding mapping table is obtained as shown in FIG. 9.

As shown in FIG. 9, values of the decoding mapping sequences $y_0[j]$= (j=0, 1, 2, ..., 63) obtained from multiplying the encoded sequences corresponding to the codeword S1=000 by the reference sequence CSS1' (i.e., the encoded sequence corresponding to the codeword S1=000) are all +1; the values of a half of the decoding mapping sequences $y_n[j]$= (n=1, 2, ..., 7, respectively corresponding to decimal values of the codeword S1) obtained from multiplying the encoded sequences corresponding to the other codewords by the reference sequence CSS1' are +1 and the other half are -1, which add up to 0. Further, the decoding mapping sequence $y_n[j]$ corresponding to any codeword S1 is in fact a result of repeating the first 8 values (as the framed part in FIG. 9) by 7 times. As the decoding mapping sequence $y_n[j]$ is in fact cyclic, one decoding mapping sequence $y_n[j]$ having 64 values may be simplified and represented by 8 values to serve as a comparison sequence later used for comparison. The same applies to the codeword S2.

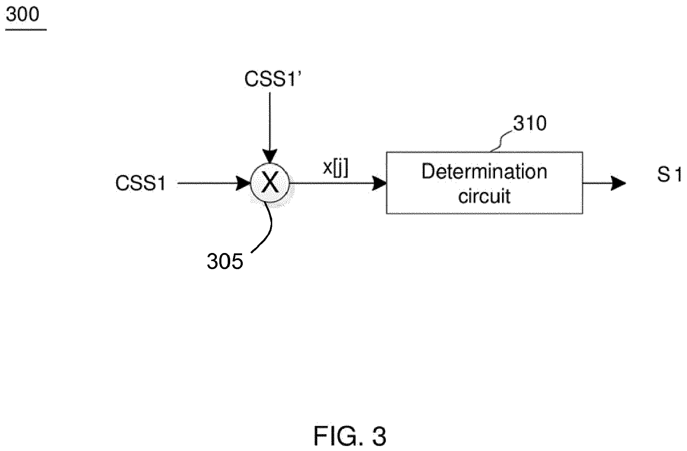

FIG. 3 shows a codeword decoding circuit for a DVB-T2 system according to an embodiment of the present invention. When the receiver decodes the codeword S1, a product x[j] is obtained by the multiplier 305 from multiplying the encoded codeword CSS1 by the reference sequence CSS1' having undergone value transformation (the reference sequence CSS1' corresponds to the codeword S1 and the codeword S2). A determination circuit 310 then decodes according to the product x[j] to obtain the codeword S1. An example of decoding and obtaining the codeword S1 is given below. After the product x[j] (j=0, 1, 2, ..., 63) is obtained, the determination circuit 310 may directly compare the product x[j] with the decoding mapping sequence $y_n[j]$ in FIG. 9 to determine the codeword corresponding to the encoded codeword CSS1. Because the encoded codeword is one of 8 orthogonal sequences possibly corresponding to the encoded codeword, the product x[j] naturally corresponds to one of the 8 decoding mapping sequences $y_n[j]$. Thus, the determination circuit 310 may simply compare the product x[j] with $y_n[j]$ to obtain the codeword S1, hence eliminating a considerable amount of correlation calculation. The codeword S2 may be processed using the same circuits.

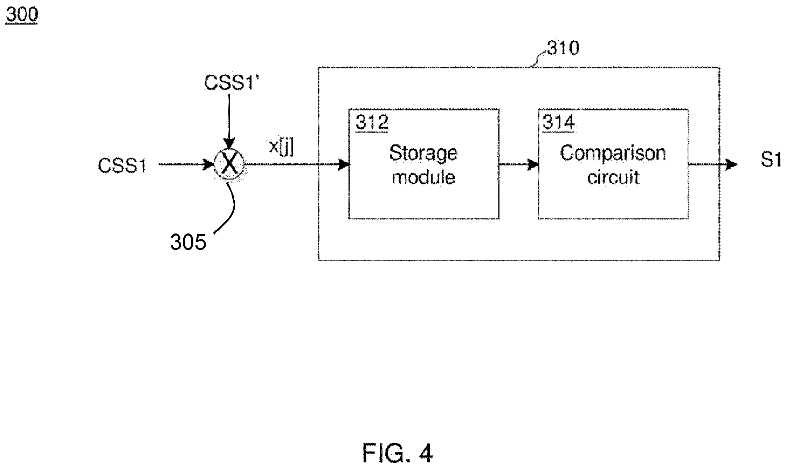

FIG. 4 is a detailed block diagram of the determination circuit 310 according to an embodiment of the present invention. The determination circuit 310 is coupled to the multiplier 305 and includes a storage module 312 and a comparison circuit 314. The product x[j] may be simplified using a storage module 312, with only features preserved. More specifically, as shown in FIG. 9, due to the cyclic property of the product x[j], the storage module 312 may include 8 registers respectively storing 8 values (i.e., any set of values of j=0 to 7, 8 to 15, ..., and 56 to 63) in any cycle of the product x[j]. The comparison circuit 314 then simply compares these values with the comparison sequences (i.e., the first 8 values of a decoding mapping sequence $y_n[j]$ corresponding to each codeword), and the corresponding codeword may be determined, thereby not only eliminating a considerable amount of correlation calculation but also reducing the data size need for looking-up and comparison processes. However, in the event of noise interference, the above comparison method may not obtain the correct codeword through comparison. Thus, in another embodiment, the storage module 312 may include accumulation registers (or equivalent circuits) that accumulate the 64 products x[j] according to the corresponding cycle. As such, even in the event of noise interference, the most similar result can still be obtained through comparison to reduce the effect of noise interference. The codeword S2 may be similarly processed by the same circuits.

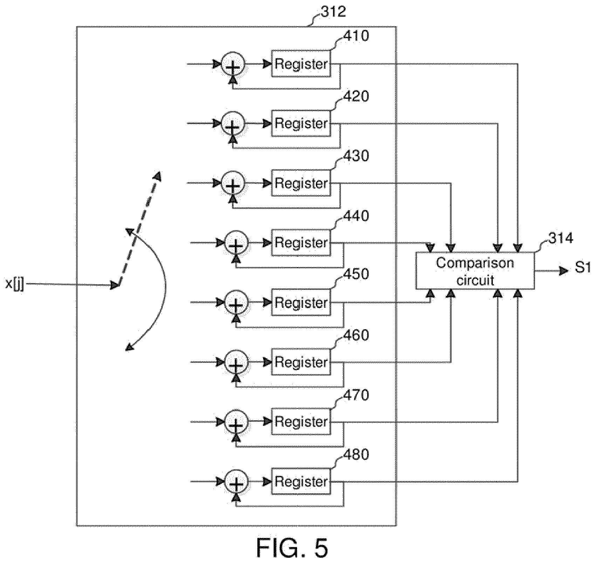

FIG. 5 shows a detailed circuit diagram of the storage module 312 according to an embodiment of the present invention. The storage module 312 includes 8 registers 410 to 480, each of which cooperating with one adder to accumulate the value of the register. When the storage module 312 stores the product x[j], 8 values are used as a cycle, and the product x[j] is sequentially stored into the registers 410 and 480 in turn. More specifically, the product x[j] of (j mod 8)=0 is stored in the register 410, the product x[j] of (j mod 8)=1 is stored in the register 420, ..., and the product x[j] of (j mod 8)=7 is stored in the register 480. As the value of each register is fed back by an adder, a final value of each register is in fact an accumulation result of 8 values. For example, assuming that the codeword corresponding to the encoded codeword CSS1 is S1=111, the final values buffered in the registers 410 to 480 are sequentially (+8, -8, -8, +8, -8, +8, +8, -8). The comparison circuit 314 then compares the values of these 8 registers with the comparison sequences to learn that the codeword S1 corresponding to the encoded codeword CSS1 is (111). Because the values of the 8 registers are accumulation results, correct comparison results may still be likely obtained even in the event of certain noise interference. For example, when the value of a register is +6, it may be regarded as +8 for comparison. The codeword S2 may be similarly processed by the same circuits.

By further representing 64 values of each comparison sequence by an 8x8 matrix (i.e., the respective first 8 values of 8 sets of decoding mapping sequences $y_n[j]$), an 8-order Hadamard matrix $H_8$ can be obtained as follows:

$$\mathbf{H_8} = \begin{bmatrix} +1 & +1 & +1 & +1 & +1 & +1 & +1 & +1 \\ +1 & -1 & +1 & -1 & +1 & -1 & +1 & -1 \\ +1 & +1 & -1 & -1 & +1 & +1 & -1 & -1 \\ +1 & -1 & -1 & +1 & +1 & -1 & -1 & +1 \\ +1 & +1 & +1 & +1 & -1 & -1 & -1 & -1 \\ +1 & -1 & +1 & -1 & -1 & +1 & -1 & +1 \\ +1 & +1 & -1 & -1 & -1 & -1 & +1 & +1 \\ +1 & -1 & -1 & +1 & -1 & +1 & +1 & -1 \end{bmatrix} \qquad \cdots\cdots \quad (1)$$

Further, the values of the registers 410 to 480 may be represented by a column matrix (also taking the codeword S1=111 corresponding to the encoded codeword CSS1 for example):

$$\mathbf{X} = [+8 \; -8 \; -8 \; +8 \; -8 \; +8 \; +8 \; -8]^{\mathrm{T}} \qquad \ldots\ldots \quad (2)$$

In equation (2), the superscript T represents a matrix transpose. By multiplying the two matrices, an equation below is obtained:

$$\mathbf{H_8} \cdot \mathbf{X} = [0 \; 0 \; 0 \; 0 \; 0 \; 0 \; 0 \; 64]^{\mathrm{T}} \qquad \ldots\ldots \quad (3)$$

Because the 8 encoded sequences are orthogonal, in the matrix from multiplying $\mathbf{H_8} \cdot \mathbf{X}$, the 0th to the 6th elements are zero and only the 7th element is non-zero. The non-zero element number (7 in this example) is transformed to binary (i.e., 111), and the codeword S1 corresponding to the encoded codeword CSS1 may then be obtained.

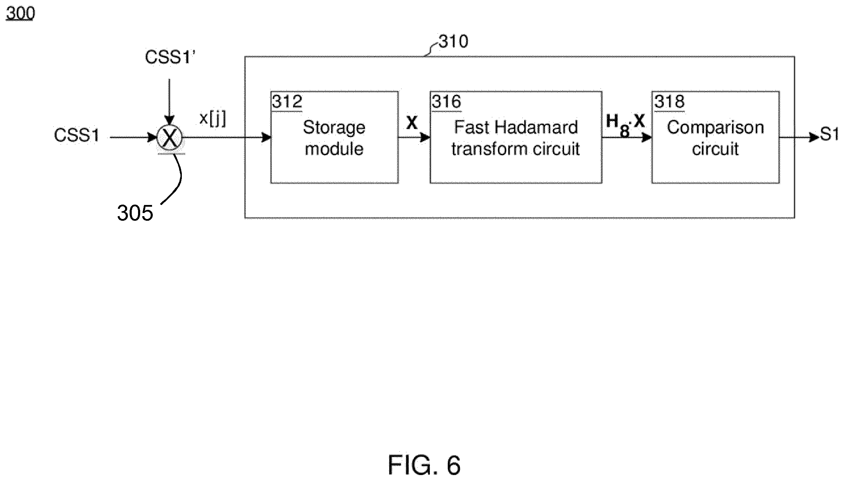

FIG. 6 shows a codeword decoding circuit of a DVB-T2 system according to another embodiment of the present invention. The determination circuit 310 is coupled to the multiplier 305 and realizes equation (3) using a fast Hadamard transform circuit 316, and the comparison circuit 318 may then decode and obtain the codeword by comparing the transformed product (i.e., elements in the matrix) of the transformed Hadamard matrix. As previously described, the values of the 8 registers are accumulation results. Thus, when more than one element in the multiplied matrix of $\mathbf{H_8} \cdot \mathbf{X}$ is caused to be non-zero due to minute interference, only the element number corresponding to the element with the largest value is transformed to binary to obtain the encoded codeword. Thus, it is probable that a correct comparison result may still be obtained. Further, such method, involving no correlation calculation nor look-up and comparison processes, is capable of promptly obtaining a result.
The codeword S2 may be similarly processed by the same circuits.

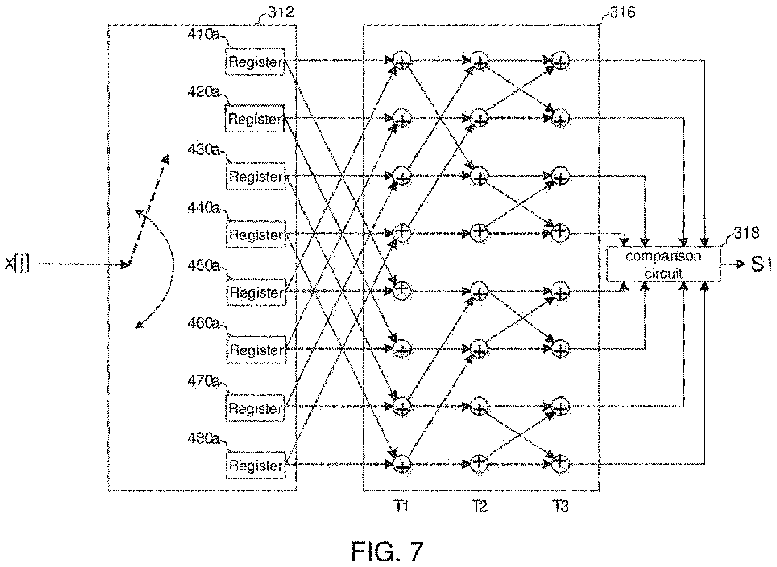

FIG. 7 shows a detailed circuit diagram of the storage module 312 and the fast Hadamard transform circuit 316 in FIG. 6. In this diagram, registers 410a to 480a are accumulation registers respectively corresponding to combinations of the registers 410 to 480 and the respective adders in FIG. 5. A dotted path in the fast Hadamard transform circuit 316 means that a value is to be multiplied by -1, and a solid path means that a value is to be multiplied by +1. After the values of the registers 410a to 480a undergo addition and multiplication of three stages (corresponding to time points T1, T2 and T3, which are spaced by a sampling period of one symbol PI), the values obtained are determined by the comparison circuit 318. The comparison details are as previously described. That is, the comparison circuit 318 is only required to identify the element number corresponding to a value that significantly differs from other values of the 8 values, the codeword S1 corresponding to the encoded codeword CSS1 may be decoded and obtained. The codeword S2 may be similarly processed by the same circuits. When the codeword S2 is processed, after the values of the registers 410a to 480a undergo addition and multiplication of four stages (corresponding to time points T1, T2, T3 and T4, which are spaced by a sampling period of one symbol P1), the values obtained are determined by the comparison circuit 318.

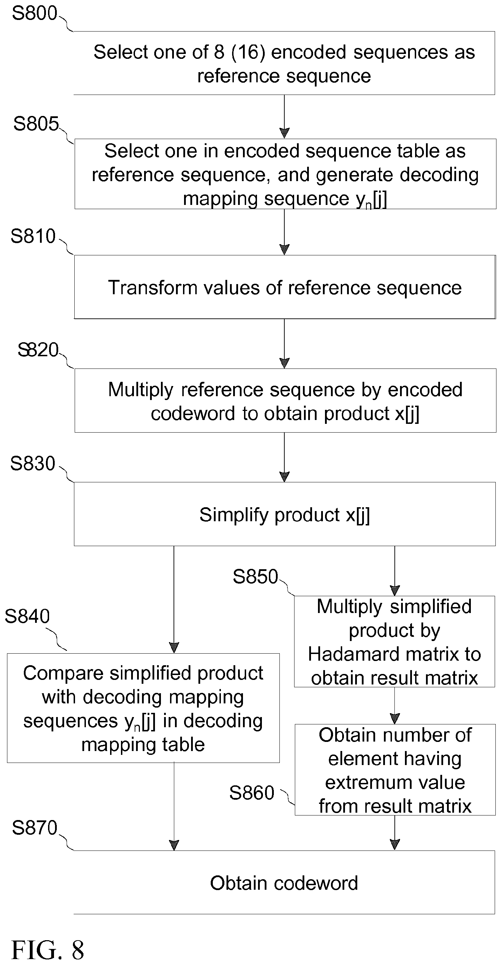

In addition to the foregoing codeword decoding circuit for DVB-T2 signals, the present invention correspondingly discloses a codeword decoding method for DVB-T2 signals. The codeword decoding method is applied to a receiver of DVB-T2 signals, and is capable of decoding and obtaining codewords carried in a P1 symbol of a DVB-T2 signal. The method is performed by the foregoing codeword decoding circuit 300 or an equivalent device. As shown in FIG. 8, the codeword decoding method for DVB-T2 signals according to an embodiment includes following steps.

In step S800, one of 8 (16) encoded sequences is used as a reference sequence. 8 (16) encoded sequences corresponding to a codeword S1 (S2) are orthogonal, and any can be used as the reference sequence for decoding and obtaining the codeword S1 (S2).

In step S805, values of the reference sequences are transformed. For example, bit 0 is transformed to a value +1, and bit 1 is transformed to a value -1.

In step S810, a decoding mapping sequence $y_n[j]$ is generated. The reference sequence with the transformed values is multiplied by other encoded sequences, the value +1 is transformed to bit 0, and the value -1 is transformed to bit 1, and a plurality of decoding mapping sequences $y_n[j]$ are obtained (e.g., the decoding mapping table shown in FIG. 9).

In step S820, the reference sequence is multiplied by the encoded codeword to obtain a product x[j]. For the codeword S1, j=0, 1, ..., 63; for the codeword S2, j=0, 1, ..., 255. The product x[j] is cyclic, and the cycle is 8 for the codeword S1. Thus, for the codeword S1, the products of 64 values may be simplified and represented by 8 values. Similarly, for the codeword S2, the cycle is 16, and so the products x[j] of 256 values may be simplified and represented by 16 values. FIG. 9 shows one example of all 8 possible products x[j] for a selected reference sequence, wherein the encoded sequence corresponding to the codeword S1=000 in the encoded sequence table is a reference sequence CSS1'. FIG. 9 shows a different result if a different encoded sequence is selected as a reference sequence in Step S805; however, the product x[j] still appears cyclic. One person skilled in the art may make modifications to implement the present invention based on this principle, and such repeated details are omitted herein.

In step S830, the product x[j] is simplified. Using the cyclic property of the product x[j], the present invention may simplify the product to simplify the decoding process for the codeword S1 and/or the codeword S2. Because the values of one cycle possess all of the properties of the product x[j], one of the cycles of the product x[j] may be used to represent the entire sequence in an ideal situation; i.e., the data size of only one cycle is used in the subsequent decoding computation. To reduce the influence of noise, values of 8 (16) cycles of the codeword S1 (S2) may be accumulated, e.g., realized by the accumulation registers in FIG. 5 (the 8 accumulation registers correspond to 8 values in one cycle of the product x[j] corresponding to the codeword S1, and 16 values for the codeword S2).

In step S840, the simplified products are compared with the decoding mapping sequences $y_n$[j] in the decoding mapping table. Taking FIG. 9 for example, assuming that the codeword corresponding to the encoded codeword CSS1 is S1=110, the simplified product X=[+1 +1 -1 -1 -1 -1 +1 +1] (before accumulation) or X=[+8 +8 -8 -8 -8 -8 +8 +8] (after accumulation). Regardless of the type of simplified product, the original codeword that the encoded codeword may be decoded and obtained after comparing with the decoding mapping table (step S870 is then performed).

In step S850, the simplified product is multiplied by a Hadamard matrix to obtain a result matrix. As previously described, the fundamental elements of the decoding mapping table (e.g., the framed part in FIG. 9) match the pattern of a Hadamard matrix, and the simplified product corresponds to one of the rows of the Hadamard matrix. Thus, in the result matrix obtained from multiplying the two, only the value of one element differs significantly from the values of the other elements, as shown in equation (3).

In step S860, the number of the element having an extremum value is obtained from the values of the result matrix. Due to the correspondence between the Hadamard matrix and the decoding mapping table in the previous step, the corresponding codeword S1 may be promptly identified according to the number of the element having an extremum value (relatively large or relatively small) from the values of the result matrix. Taking the previous example for instance, only the $7^{th}$ element in the result matrix $\mathbf{H_8} \cdot \mathbf{X}$ in equation (3) is non-zero, and the decimal value of the codeword S1 in the decoding mapping table (FIG. 9) exactly corresponds to the located row of the Hadamard matrix. Thus, in this step, the number (7 in this example) of the non-zero element is transformed to a binary value (111) to promptly decode and obtain the codeword. In other embodiments, if the reference sequence selected in step S805 is not an encoded sequence corresponding to the codeword S1=000 in the encoded sequence list, the decoding mapping table will display an arrangement different from FIG. 9 in order to correspond to the Hadamard matrix.

In step S870, the codeword is obtained.

It is known from the above description and flowchart that, whether solely step S840 is performed, or both step S850 and step S860 are performed, the result of step S870 can be obtained from both of the methods, and so either may be selected and performed.

The description above is given with an example of decoding the codeword S1. One person skilled in the art can extend the present invention to the codeword S2 based on the disclosure of the foregoing embodiments. For example, when the storage module 312 is applied for decoding the codeword S2, 16 registers and 16 adders are involved, and the Hadamard matrix in equation (1) is modified to 16 orders.

Implementation details and variations of the method of the present invention in FIG. 8 may be understood by one person skilled in the art based on the disclosure associated with the circuit of the present invention in FIG. 3 to FIG. 7, and such shall be omitted herein. While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

**Claims**

1. A codeword decoding circuit (300) for a Digital Video Broadcasting (DVB) receiver, for decoding an encoded codeword in an input signal, the circuit comprising:

    a multiplier (305), multiplying the input signal by a reference sequence to generate a plurality of products, which are in a cyclic sequence; and
    a determination circuit (310), coupled to the multiplier (305), decoding the encoded codeword according to at least a part of the products and a plurality of comparison sequences;
    wherein, the input signal corresponds to one of the plurality of encoded sequences, and the comparison sequences are results of multiplying the reference sequence by the encoded sequences.

2. The codeword decoding circuit according to claim 1,
    wherein a cycle of the products is 8 values when the reference sequences comprises 64 values, and/or

wherein a cycle of the products is 16 values when the reference sequence comprises 256 values.

3. The codeword decoding circuit according to claim 1 or 2, wherein the determination circuit (310) comprises:

a storage module (312), coupled to the multiplier (305), storing at least a part of the products; and
a comparison circuit (314), coupled to the storage module (312), comparing the products stored in the storage module with the comparison sequences to decode the encoded codeword.

4. The codeword decoding circuit according to claim 3, wherein the storage module (312) comprises:

a plurality of registers (410..480), coupled to the multiplier (305), storing the products;
wherein, a quantity of the registers (410..480) is equal to a quantity of the values of one cycle of the products, and the products are sequentially stored into the registers in turn.

5. The codeword decoding circuit according to claim 1 or 2, wherein the determination circuit (310) comprises:

a storage module (312), coupled to the multiplier (305), storing at least a part of the products;
a transforming circuit (316), coupled to the storage module (312), transforming the products stored in the storage module according to the comparison sequences to generate a plurality of transformed products; and
a comparison circuit (318), coupled to the transforming circuit (316), comparing the transformed products to decode the encoded codeword.

6. The codeword decoding circuit according to claim 5,
wherein a part of the comparison sequences are a Hadamard matrix, and the transforming circuit (316) performs Hadamard matrix transform on the products stored in the storage module (312), and/or
wherein each of the transform products corresponds to one codeword, the comparison circuit (318) compares the transformed products to determine a transformed product having an extremum value from the transformed products, and the codeword corresponding to the transformed product having the extremum value is the codeword corresponding to the encoded codeword.

7. The codeword decoding circuit according to claim 5 or 6, wherein the storage module (312) comprises:

a plurality of registers (410a..480a), coupled to the multiplier (305), storing the products;
wherein, a quantity of the registers (410a..480a) is equal to a quantity of values of one cycle of the products, and the products are sequentially stored into the registers in turn.

8. A codeword decoding method for a Digital Video Broadcasting (DVB) receiver, for decoding an encoded codeword in an input signal, the method comprising:

multiplying the input signal by a reference sequence to generate a plurality of products, which are in a cyclic sequence; and
decoding the encoded codeword according to at least a part of the products and a plurality of comparison sequences;
wherein, the input signal corresponds to one of the plurality of encoded sequences, and the comparison sequences are results of multiplying the reference sequence by the encoded sequences.

9. The codeword decoding method according to claim 8,
wherein a cycle of the products is 8 values when the reference sequences comprises 64 values, and/or
wherein a cycle of the products is 16 values when the reference sequence comprises 256 values.

10. The codeword decoding method according to claim 8 or 9, wherein the step of decoding the encoded codeword according to the at least a part of the products and the plurality of comparison sequences comprises:

storing at least a part of the products; and
comparing the stored products with the comparison sequences to decode the encoded codeword.

11. The codeword decoding method according to claim 10, wherein the step of storing the at least a part of the products comprises:

sequentially storing the products into a plurality of registers (410..480) in turn;
wherein, a quantity of the registers is equal to a quantity of the values of one cycle of the products.

12. The codeword decoding method according to claim 8 or 9, wherein the step of decoding the encoded codeword according to the at least a part of the products and the comparison sequences comprises:

   storing at least a part of the products;
   transforming the stored products according to the comparison sequences to generate a plurality of transformed products; and
   comparing the transformed products to decode the encoded codeword.

13. The codeword decoding method according to claim 12,
   wherein a part of the comparison sequences are a Hadamard matrix, and the transforming step performs a Hadamard matrix transform on the stored products, and/or
   wherein each of the transform products corresponds to one codeword, the step of comparing the products compares the transformed products to determine a transformed product having an extremum value from the transformed products, and the codeword corresponding to the transformed product having the extremum value is the codeword corresponding to the encoded codeword.

14. The codeword decoding method according to claim 12 or 13, wherein the step of storing the at least a part of the products comprises:

   sequentially storing the products into a plurality of registers (410a..480a) in turn;
   wherein, a quantity of the registers is equal to a quantity of values of one cycle of the products.

15. The codeword decoding circuit according to any of claims 1 to 7 or the codeword decoding method according to any of claims 8 to 14, wherein the reference sequence is one selected from the encoded sequences and is processed by value transform.

EP 3 247 064 A1

| P1 | P2 | Data body |
|----|----|-----------|

T2 data frame

FIG. 1

EP 3 247 064 A1

FIG. 2

FIG. 3

FIG. 4

FIG. 5

EP 3 247 064 A1

300

310

CSS1'

EP 3 247 064 A1

CSS1 → ⊗ — x[j] →

305

| 312 Storage module | X → | 316 Fast Hadamard transform circuit | $H_8 \cdot X$ → | 318 Comparison circuit | → S1 |

FIG. 6

FIG. 7

S800

Select one of 8 (16) encoded sequences as reference sequence

S805

Select one in encoded sequence table as reference sequence, and generate decoding mapping sequence $y_n[j]$

S810

Transform values of reference sequence

S820

Multiply reference sequence by encoded codeword to obtain product $x[j]$

S830

Simplify product $x[j]$

S850

Multiply simplified product by Hadamard matrix to obtain result matrix

S840

Compare simplified product with decoding mapping sequences $y_n[j]$ in decoding mapping table

Obtain number of element having extremum value from result matrix

S860

S870

Obtain codeword

FIG. 8

| Code word S1 | Decoding mapping sequence $y_n[j]$ | | | | | | | |
|---|---|---|---|---|---|---|---|---|
| 000 | +1+1+1+1+1+1+1+1 | +1+1+1+1+1+1+1 | +1+1+1+1+1+1+1+1 | +1+1+1+1+1+1+1+1 | +1+1+1+1+1+1+1+1 | +1+1+1+1+1+1+1+1 | +1+1+1+1+1+1+1+1 | +1+1+1+1+1+1+1+1 |
| 001 | +1-1+1-1+1-1+1-1 | +1-1+1-1+1-1+1-1 | +1-1+1-1+1-1+1-1 | +1-1+1-1+1-1+1-1 | +1-1+1-1+1-1+1-1 | +1-1+1-1+1-1+1-1 | +1-1+1-1+1-1+1-1 | +1-1+1-1+1-1+1-1 |
| 010 | +1+1-1-1+1+1-1-1 | +1+1-1-1+1+1-1-1 | +1+1-1-1+1+1-1-1 | +1+1-1-1+1+1-1-1 | +1+1-1-1+1+1-1-1 | +1+1-1-1+1+1-1-1 | +1+1-1-1+1+1-1-1 | +1+1-1-1+1+1-1-1 |
| 011 | +1-1-1+1+1-1-1+1 | +1-1-1+1+1-1-1+1 | +1-1-1+1+1-1-1+1 | +1-1-1+1+1-1-1+1 | +1-1-1+1+1-1-1+1 | +1-1-1+1+1-1-1+1 | +1-1-1+1+1-1-1+1 | +1-1-1+1+1-1-1+1 |
| 100 | +1+1+1+1-1-1-1-1 | +1+1+1+1-1-1-1-1 | +1+1+1+1-1-1-1-1 | +1+1+1+1-1-1-1-1 | +1+1+1+1-1-1-1-1 | +1+1+1+1-1-1-1-1 | +1+1+1+1-1-1-1-1 | +1+1+1+1-1-1-1-1 |
| 101 | +1-1+1-1-1+1-1+1 | +1-1+1-1-1+1-1+1 | +1-1+1-1-1+1-1+1 | +1-1+1-1-1+1-1+1 | +1-1+1-1-1+1-1+1 | +1-1+1-1-1+1-1+1 | +1-1+1-1-1+1-1+1 | +1-1+1-1-1+1-1+1 |
| 110 | +1+1-1-1-1-1+1+1 | +1+1-1-1-1-1+1+1 | +1+1-1-1-1-1+1+1 | +1+1-1-1-1-1+1+1 | +1+1-1-1-1-1+1+1 | +1+1-1-1-1-1+1+1 | +1+1-1-1-1-1+1+1 | +1+1-1-1-1-1+1+1 |
| 111 | +1-1-1+1-1+1+1-1 | +1-1-1+1-1+1+1-1 | +1-1-1+1-1+1+1-1 | +1-1-1+1-1+1+1-1 | +1-1-1+1-1+1+1-1 | +1-1-1+1-1+1+1-1 | +1-1-1+1-1+1+1-1 | +1-1-1+1-1+1+1-1 |

FIG. 9

Europäisches
Patentamt

European
Patent Office

Office européen
des brevets

# EUROPEAN SEARCH REPORT

Application Number

EP 16 20 7425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MINGCHAO YU ET AL: "Time domain synchronization and decoding of P1 symbol in DVB-T2", 2011 IEEE INTERNATIONAL CONFERENCE ON ACOUSTICS, SPEECH AND SIGNAL PROCESSING : (ICASSP 2011) ; PRAGUE, CZECH REPUBLIC, 22 - 27 MAY 2011, IEEE, PISCATAWAY, NJ, 22 May 2011 (2011-05-22), pages 3520-3523, XP032000573, DOI: 10.1109/ICASSP.2011.5946237 ISBN: 978-1-4577-0538-0 * page 3520 - page 3522 * | 1-15 | INV. H04L1/08 H04L7/04 H04B1/709 ADD. H04L27/26 |
| Y | US 6 091 761 A (POPOVIC BRANISLAV [SE]) 18 July 2000 (2000-07-18) * column 1 - column 6; claims 1-5; figures 4-6 * | 1-15 | |
| A | POPOVIC B M ED - INSTITUTE OF ELECTRICAL AND ELECTRONICS ENGINEERS: "Efficient despreaders for multi-code CDMA systems", 1997 IEEE 6TH. INTERNATIONAL CONFERENCE ON UNIVERSAL PERSONAL COMMUNICATIONS RECORD. SAN DIEGO, 12 - 16TH. OCT. 1997; [IEEE INTERNATIONAL CONFERENCE ON UNIVERSAL PERSONAL COMMUNICATIONS], NEW YORK, IEEE, US, vol. 2, 12 October 1997 (1997-10-12), pages 516-520, XP010248762, DOI: 10.1109/ICUPC.1997.627218 ISBN: 978-0-7803-3777-0 * the whole document * | 1-15 | TECHNICAL FIELDS SEARCHED (IPC) H04L H04B H04N G06F |

The present search report has been drawn up for all claims

| Place of search | Date of completion of the search | Examiner |
|---|---|---|
| Munich | 25 July 2017 | Vucic, Nikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 7425

This annex lists the patent family members relating to the patent documents cited in  the above-mentioned European search report.
The members are as contained in the European Patent Office EDP file on
The European Patent Office is in no way liable for these particulars which are merely given for the purpose of information.

25-07-2017

| Patent document cited in search report | | Publication date | Patent family member(s) | | Publication date |
|---|---|---|---|---|---|
| US 6091761 | A | 18-07-2000 | AU | 738415 B2 | 20-09-2001 |
| | | | BR | 9714325 A | 08-02-2000 |
| | | | CA | 2277747 A1 | 30-07-1998 |
| | | | CN | 1249090 A | 29-03-2000 |
| | | | EP | 0950296 A1 | 20-10-1999 |
| | | | JP | 2001509339 A | 10-07-2001 |
| | | | KR | 20000070386 A | 25-11-2000 |
| | | | TW | 379487 B | 11-01-2000 |
| | | | US | 6091761 A | 18-07-2000 |
| | | | WO | 9833290 A1 | 30-07-1998 |

EPO FORM P0459

For more details about this annex : see Official Journal of the European Patent Office, No. 12/82